# EUROPÄISCHE PATENTSCHRIFT

(11) **EP 1 069 029 B1**
(45) Veröffentlichungstag und Bekanntmachung des Hinweises auf die Patenterteilung: **02.05.2003**
(21) Anmeldenummer: 00113853.6
(22) Anmeldetag: 30.06.2000
(51) Int. Cl.: B62D 25/10, B60J 7/20

(54) **Heckklappe eines Fahrzeugs**
Tailgate for a vehicle
Hayon de véhicule

(30) Priorität: 12.07.1999 DE 19932500; 12.07.1999 DE 19932501
(43) Veröffentlichungstag der Anmeldung: 17.01.2001
(73) Patentinhaber: Webasto Vehicle Systems International GmbH, 82131 Stockdorf (DE)
(72) Erfinder: Dintner, Thomas, 82256 Fürstenfeldbruck (DE); Miklosi, Stefan, 81247 München (DE); Schütt, Thomas, 82256 Fürstenfeldbruck (DE)
(74) Vertreter: Wiese, Gerhard

(56) Entgegenhaltungen:
- EP-A- 0 949 104
- DE-C- 4 445 944

## Beschreibung

Die Erfindung betrifft eine Heckklappe eines Fahrzeugs, die sowohl als Kofferraumdeckel wie auch als Verdeckkastenklappe verschwenkbar ist.

Die gattungsgemäße DE 44 45 944 C1 zeigt ein Fahrzeug mit einer Dachkonstruktion, bei der ein Dachteil und ein Rückfensterteil über eine karosseriefeste Zwangssteuerung zusammengeklappt und im oberen Bereich des heckseitigen Kofferraums verstaut werden kann. Um dies zu bewerkstelligen, ist unter dem Kofferraumdeckel ein U-förmiger Hilfsrahmen vorgesehen, wobei der quer verlaufende Schenkel des U-förmigen Hilfsrahmens im hintersten und untersten Endbereich des Kofferraums angeordnet ist. Die seitlichen Schenkel des U-förmigen Hilfsrahmens sind jeweils über eine siebengelenkige Scherenhubanordnung mit dem vorderen Ende des Kofferraumdeckels verbunden. Zum Beladen des Kofferraums wird der Kofferraumdeckel über die beidseitigen Scherenhubanordnungen geöffnet und geschlossen. Zum Verstauen der zusammengeklappten Dachanordnung wird der Kofferraumdeckel zusammen mit dem Hilfsrahmen um den quer verlaufenden Schenkel des U-förmigen Hilfsrahmens über Gasdruckfedern und Hydraulikzylinder nach oben und nach hinten geschwenkt. Der Übergangsbereich zwischen Heckklappe und den hinteren Sitzen ist häufig durch eine mehrteilige Abdeckung mit einer eigenen aufwendigen Betätigungsmechanik abgedeckt, wie dies beispielsweise aus der DE 197 14 105 A1 bekannt ist.

Diese Anordnung ist nachteilig, da sie sehr viele bewegte Teile benötigt. Weiterhin ist die Gestaltung der Abdichtung der hinteren unteren Querkante des Kofferraumdekkels gegenüber der Karosserie problematisch, da die Drehbewegung des Kofferraumdeckels beim Verstauen der Dachanordnung im Kofferraum um die im hinteren, in vertikaler Erstreckung des Kofferraumdeckels unteren Bereich angeordnete Drehachse erfolgt. Diese Schwenkbewegung kollidiert mit dieser unteren quer verlaufenden Kofferraumdichtung. Weiterhin ist die Formstabilität einer siebengelenkigen Scherenhubanordnung bei seitlich wirkenden Kräften auf den Kofferraumdeckel nicht optimal. Um diesem systembedingten Nachteil zu begegnen, muß daher die Scherenhubanordnung sehr robust und damit schwergewichtig ausgelegt werden. Andererseits muß bei dieser Konstruktion, um eine hohe Funktions- und Passgenauigkeit zu erreichen, ein hoher Fertigungsaufwand betrieben werden.

Der vorliegenden Erfindung liegt daher die Aufgabe zugrunde, eine eingangs genannte Heckklappe zu schaffen, die eine einfache und dennoch zuverlässige Verschwenkmechanik aufweist.

Diese Aufgabe wird durch eine Heckklappe eines Fahrzeugs gelöst, die wahlweise mittels eines vorderen zwei Hebel aufweisenden Viergelenkmechanismus als Kofferraumdeckel um eine vordere Schwenkachse oder mittels eines hinteren zwei Hebel aufweisenden Viergelenkmechanismus als Verdeckkastenklappe um eine hintere Schwenkachse schwenkbar ist, dadurch gekennzeichnet, daß ein gemeinsamer Hebel sowohl ein Teil des vorderen Viergelenkmechanismus wie auch ein Teil des hinteren Viergelenkmechanismus ist.

Da der zwischen Karosserie und Heckklappe gelenkig angeordnete zweite Hebel des vorderen Viergelenks gleichzeitig ein Hebel des hinteren Viergelenks ist, sind zur Ausbildung von zwei Viergelenken nur noch drei Hebel erforderlich, wobei das vordere Viergelenk durch einen ersten und den zweiten Hebel und das hintere Viergelenk durch den zweiten und einen dritten Hebel gebildet werden. Ein weiterer Vorteil ist darin zu sehen, daß durch Antrieb des zweiten Hebels sowohl die Verschwenkung um das vordere Viergelenk als auch die Verschwenkung um das hintere Viergelenk erfolgen kann.

Durch diese Anordnung ist es möglich, einen einfachen mechanischen Aufbau zu realisieren, bei dem auch bei einem niedrigen Fertigungsaufwand eine hohe Präzision und eine gute Funktionalität vorliegt. Weiterhin ist es möglich, durch das jeweilige Verwenden eines Viergelenks bei beiden Schwenkbewegungen ein jeweils zur Dichtlippe vertikales Abheben der Heckklappe zu bewerkstelligen, so daß eine Kollision mit einer die Öffnung des Kofferraums abdichtenden Dichtung vermieden wird. Damit kann die Abdichtung des Kofferraums einfacher gestaltet werden.

Weitere vorteilhafte Ausgestaltungen sind in den Unteransprüchen angegeben.

Da die Lagerung der Heckklappe mittels eines vorderen und eines hinteren Viergelenkmechanismus eine mechanische Überbestimmung darstellt, wird beim wahlweisen Verschwenken des vorderen oder des hinteren Viergelenks immer das jeweils nicht aktive Viergelenk entkoppelt oder deaktiviert. Daher ist die vorstehende Ausführungsform besonders vorteilhaft, da bei dieser Anordnung entweder zum Schwenken um das vordere Viergelenk nur noch der dritte Hebel des hinteren Viergelenks oder zum Schwenken um das hintere Viergelenk nur noch der erste Hebel des vorderen Viergelenks jeweils an einem seiner zwei Gelenke gelöst werden muß.

In einer weiteren Ausführungsform ist auf vorteilhafte Weise zwischen dem ersten Hebel und dem dritten Hebel eine Koppel, insbesondere in Form eines Stützhebels, vorgesehen, die auf einfache Weise den jeweils ausgeklinkten bzw. inaktiven ersten oder dritten Hebel während der jeweiligen Verschwenkung entweder um den vorderen oder den hinteren Viergelenkmechanismus in Position hält.

Vorteilhaft bei dieser Anordnung ist weiterhin, daß beim gleichzeitigen Arretieren sowohl des ersten Hebels als auch des dritten Hebels über jeweils einen vorderen Schloßmechanismus und einen hinteren Schloßmechanismus die Heckklappe, beruhend auf der mechanischen Überbestimmtheit, in geschlossenem Zustand gehalten werden kann.

Bevorzugt ist eine Stauraumabdeckung mit der Koppel (Stützhebel) verbunden. Diese kann mit der Koppel fest verbunden sein oder an der Koppel dreh- oder schwenkbar befestigt sein.

Bevorzugte Ausführungsbeispiele der Erfindung werden nachfolgend unter Bezugnahme auf die beiliegenden Zeichnungen im Detail beschrieben. Es zeigt:
- Fig. 1: eine Seitenansicht eines Fahrzeughecks mit einer Heckklappe, bei der sich die Heckklappe in geschlossener Stellung befindet;
- Fig. 2: eine Seitenansicht eines Fahrzeughecks mit einer Heckklappe, bei der die Heckklappe um den vorderen Viergelenkmechanismus verschwenkt ist, um den Zugang zum Kofferraum zu ermöglichen;
- Fig. 3: eine Seitenansicht eines Fahrzeughecks mit einer Heckklappe, bei der die Heckklappe um den hinteren Viergelenkmechanismus verschwenkt ist, um das zusammengefaltete Verdeck zu verstauen;
- Fig. 4: eine vergrößerte Detailansicht eines ersten Schloßbereiches;
- Fig. 5: eine vergrößerte Detailansicht eines zweiten Schloßbereiches; und
- Fig. 6-8: unterschiedliche Positionen entsprechend den Fig. 1 bis 3, in denen die Lage einer Stauraumabdeckung dargestellt ist.

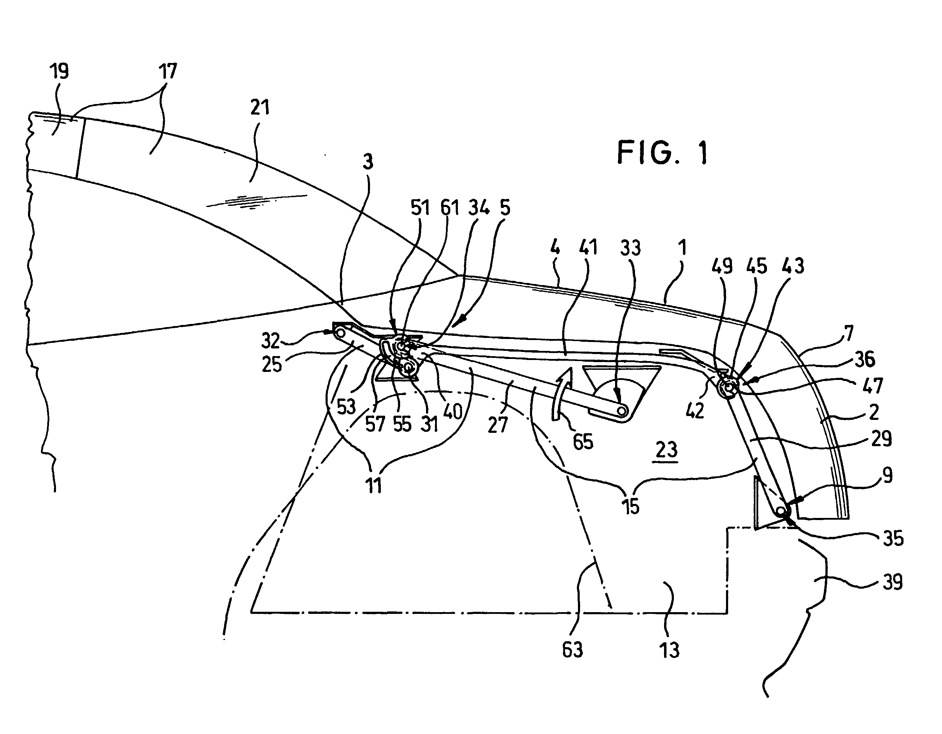

Gemäß Fig. 1 bis 3 ist jeweils die Heckpartie eines Fahrzeugs in Seitenansicht dargestellt, wobei sich in der Zeichnung links das vordere Ende und in der Zeichnung rechts das hintere Ende des Fahrzeugs befinden.

Das Fahrzeug hat eine Heckklappe 1, die wahlweise als Kofferraumdeckel um eine nahe ihrer Vorderkante 3 angeordnete vordere Schwenkachse 5 oder als Verdeckkastenklappe um eine nahe ihrer Hinterkante 7 angeordnete hintere Schwenkachse 9 schwenkbar ist. Als vordere Schwenkachse 5 ist ein vorderer Viergelenkmechanismus 11 zwischen der Heckklappe 1 und einer Karosserie 13 und als hintere Schwenkachse 9 ist ein hinterer Viergelenkmechanismus 15 zwischen der Karosserie 13 und der Heckklappe 1 ausgebildet. Im Bereich der Vorderkante 3 ist eine Dachkonstruktion 17, bestehend aus einem an der Oberkante der Windschutzscheibe (nicht dargestellt) befestigbaren festen Dachelement 19 und einem am Dachelement 19 angelenkten Heckfensterelement 21 angebracht. Diese Dachkonstruktion 17 ist benachbart zur Vorderkante 3 der Heckklappe an der Karosserie 13 angelenkt, über eine Zwangssteuerung (nicht dargestellt) zusammenfaltbar und bei um die hintere Schwenkachse 9 eingeschwenkter Heckklappe 1 im Kofferraum 23 verstaubar.

In Fig. 1 ist die Heckklappe 1 in geschlossener Stellung dargestellt. Die Heckklappe 1 deckt den wahlweise als Stauraum für Gepäck und / oder die zusammengefaltete Dachkonstruktion 17 dienenden Kofferraum 23 ab. Der im vorderen Bereich der Heckklappe 1 angeordnete, vordere Viergelenkmechanismus 11 umfaßt einen ersten Hebel 25, der über ein erstes Gelenk 31 an einem vorderen Endabschnitt 40 eines Stützhebels 41 und über ein zweites Gelenk 32 an der Heckklappe 1 angelenkt ist, und einen zweiten Hebel 27, der über ein drittes Gelenk 33 an der Karosserie 13 und über ein viertes Gelenk 34 an der Heckklappe 1 angelenkt ist. Das erste Gelenk 31 ist nahe dem vorderen Endbereich der Heckklappe 1 und das zweite Gelenk 32 ist vor und etwas über dem ersten Gelenks 31 nahe der Vorderkante 3 angeordnet. Das dritte Gelenk 33 ist in einem mittleren Abschnitt der Längserstreckung des Kofferraums 23 etwas unterhalb des ersten Gelenks 31 und das vierte Gelenk 34 im vorderen Endbereich der Heckklappe 1 etwas über und vor dem ersten Gelenk 31 angeordnet. Der zweite Hebel 27 ist um etwa das dreifache länger als der erste Hebel 25.

Der hintere Viergelenkmechanismus 15 besteht aus dem zweiten Hebel 27 und einem im hinteren Endbereich des Kofferraums 23 in etwa vertikal angeordneten dritten Hebel 29, der über ein fünftes Gelenk 35 an der Karosserie 13 und über ein sechstes Gelenk 36 an einem hinteren Endabschnitt 42 des Stützhebels 41 angelenkt ist. Die Heckklappe 1 hat im hinteren Endbereich einen sich nach unten in die Nähe eines Stoßfängers 39 erstreckenden schräg nach vorn oben geneigten Abschnitt 2. Der dritte Hebel 29 erstreckt sich auf der Innenseite des Kofferraums 23 in etwa parallel und benachbart zu diesem Abschnitt 2 der Heckklappe 1, wobei das fünfte Gelenk 35 nahe der unteren Kante des Abschnitts 2, benachbart zum Stoßfänger 39, und das sechste Gelenk 36 im hinteren oberen Bereich des Kofferraums 23 angeordnet ist.

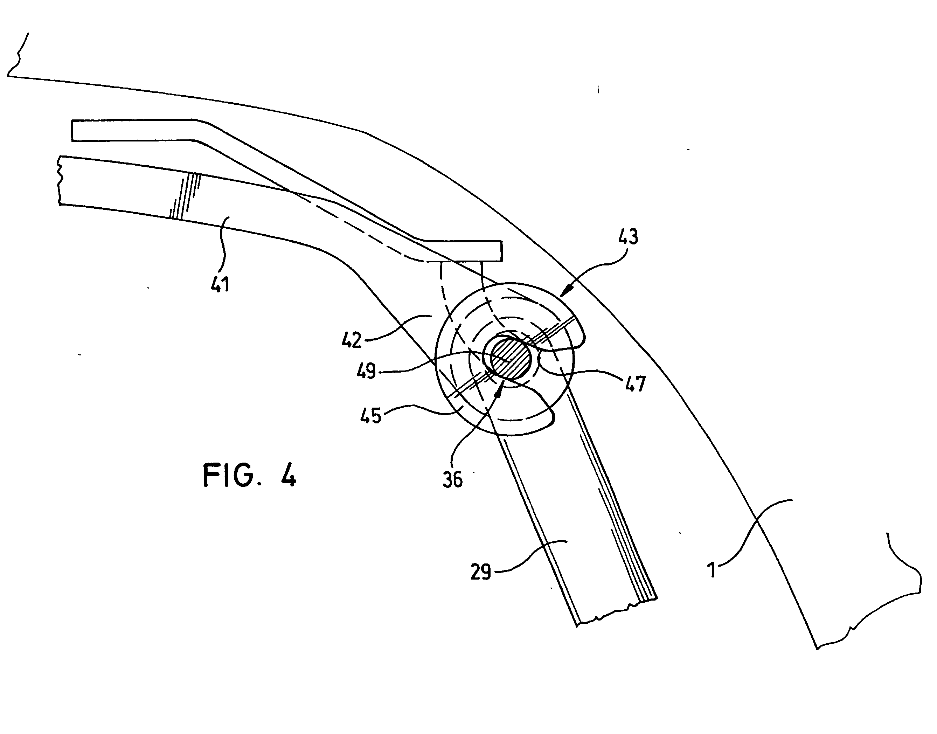

Zwischen dem ersten Gelenk 31 und dem sechsten Gelenk 36 ist der Stützhebel 41 unterhalb und seitlich eines horizontalen Abschnitts 4 der Heckklappe 1 bei geschlossener Heckklappe 1 in etwa parallel zum horizontalen Abschnitt 4 angeordnet. Das sechste Gelenk 36 ist über einen ersten Schloßmechanismus 43 mit der Heckklappe 1 lösbar verbunden (siehe auch Fig. 4). Der erste Schloßmechanismus 43 hat konzentrisch zur Drehachse um das sechste Gelenk 36 eine drehbare Scheibe 45, die mit einem radialen Schlitz 47 versehen ist, und einen an der Heckklappe 1 angeordneten Stift 49, der, wenn die Heckklappe um den vorderen Viergelenkmechanismus 11 verschwenkt wird, in den Schlitz 47 einführbar ist. Um die Heckklappe 1 in der in Fig. 1 dargestellten Stellung zu halten, wird die Scheibe 45 verdreht, wobei die Scheibe 45 zusammen mit dem sechsten Gelenk 36 mit dem Stift 49 und damit mit der Heckklappe 1 verriegelt wird.

Der erste Schloßmechanismus 43 kann demnach zwei Stellungen einnehmen, wobei in einer ersten Stellung das sechste Gelenk 36 mit der Heckklappe 1 verbunden ist und in einer zweiten Stellung das sechste Gelenk 36 gegenüber der Heckklappe 1 gelöst ist. Befindet sich der erste Schloßmechanismus 43 in der nicht verriegelten Stellung, so wird das sechste Gelenk 36 zusammen mit der Scheibe 45 und dem dritten Hebel 29 durch den Stützhebel 41 in Position gegenüber dem Stift 49 gehalten.

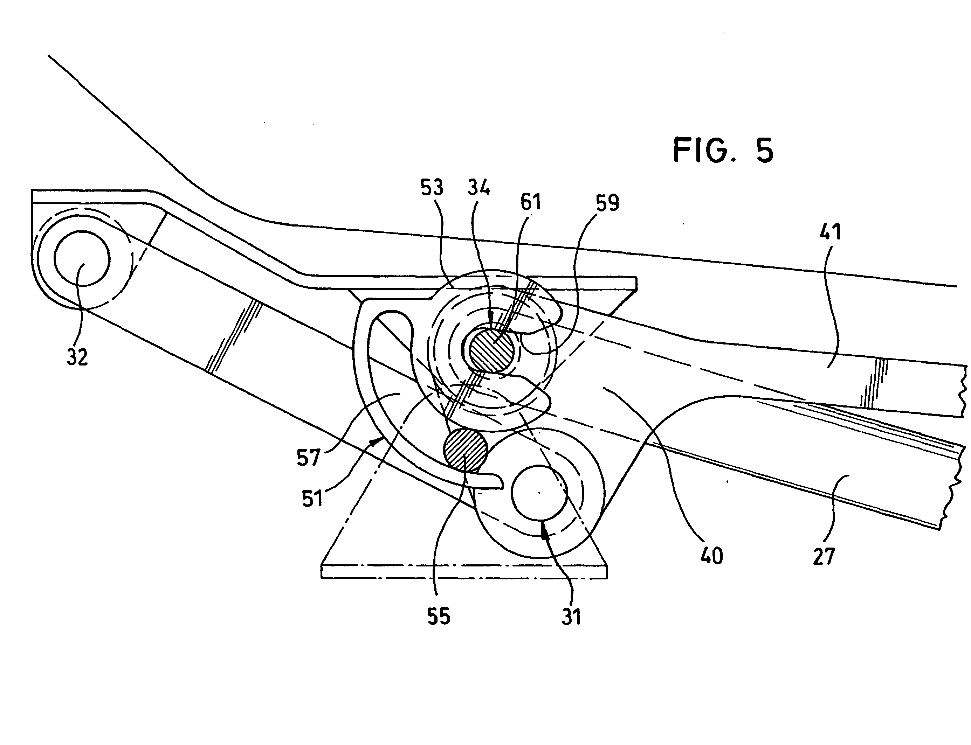

Das erste Gelenk 31 ist über einen zweiten Schloßmechanismus 51 mit der Karosserie 13 lösbar verbunden. Der zweite Schloßmechanismus 51 hat eine Riegelscheibe 53, die an einem Fortsatz des vorderen Endabschnitts 40 des Stützhebels 41 derart angeordnet ist, daß der Drehpunkt der Riegelscheibe 53 konzentrisch zur Drehachse des vierten Gelenks 34 zu liegen kommt, wenn sich die Heckklappe 1 in geschlossenem Zustand befindet (siehe auch Fig. 5). Die Riegelscheibe 53 hat einen zu ihrem Drehpunkt konzentrischen, kreisförmigen Schlitz 57. Weiterhin hat der zweite Schloßmechanismus 51 einen an der Karosserie befestigten Stift 55, der bei geschlossener Heckklappe 1 durch eine wechselseitige Drehbewegung der Riegelscheibe 53 mit dem an der Riegelscheibe ausgebildeten kreisförmigen Schlitz 57 in und außer Eingriff bringbar ist.

Die Riegelscheibe 53 ist zusätzlich mit einem radialen Schlitz 59 versehen, der mit einem an der Heckklappe 1 als Verlängerung der Drehachse des vierten Gelenks 34 angeordneten weiteren Stift 61 durch eine wechselseitige Drehbewegung der Riegelscheibe 53 in und außer Eingriff bringbar ist.

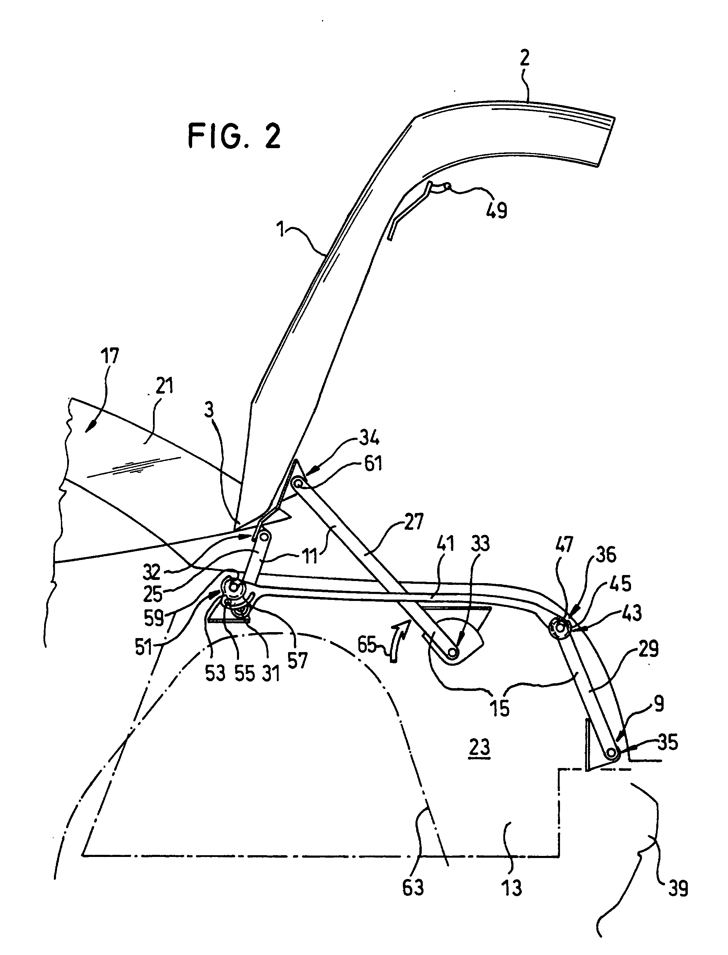

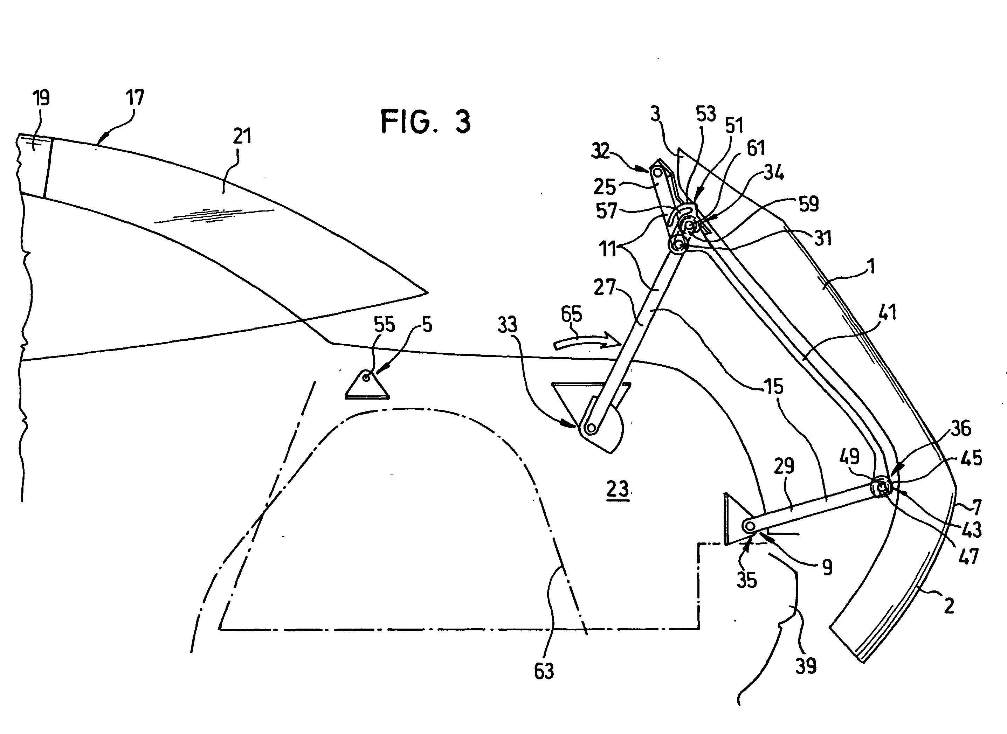

Damit kann der zweite Schloßmechanismus 51 drei Stellungen einnehmen, wobei in einer ersten Stellung das erste Gelenk 31 über den Stützhebel 41 mit der Karosserie 13 und ebenso über den Stützhebel 41 mit der Heckklappe 1 verbunden ist (Fig. 1). In einer zweiten Stellung ist das erste Gelenk 31 über den Stützhebel 41 mit der Karosserie 13 verbunden und der Stützhebel 41 ist gegenüber der Heckklappe 1 gelöst (Fig. 2). In einer dritten Stellung ist der Stützhebel 41 zusammen mit dem ersten Gelenk 31 gegenüber der Karosserie 13 gelöst und mit der Heckklappe 1 verbunden (Fig. 3).

Die Verriegelungsfunktion des radialen Schlitzes 59 der Riegelscheibe 53 mit dem an der Heckklappe 1 befestigten Stift 61 ist eine zusätzliche Funktion, um einerseits bei geschlossener Heckklappe 1 einen sicheren Verschluß der Heckklappe 1 zu gewährleisten und andererseits die Position des ersten Gelenks 31 beim Verschwenken der Heckklappe 1 um den hinteren Viergelenkmechanismus 15, d. h. wenn das erste Gelenk 31 gegenüber der Karosserie 13 gelöst ist, sicher in Position zu halten. Normalerweise genügt der Stützhebel 41, um das von der Karosserie 13 gelöste erste Gelenk 31 in Position zu halten, da bei Verriegelung des ersten Gelenks 31 gegenüber der Karosserie 13 und des sechsten Gelenks 36 gegenüber der Heckklappe 1 eine mechanische Überbestimmtheit vorliegt, die die Heckklappe 1 in geschlossener Position hält.

Der hintere Viergelenkmechanismus 15 und der vordere Viergelenkmechanismus 11 teilen sich den zweiten Hebel 27, so daß, wenn die Heckklappe 1 um den hinteren Viergelenkmechanismus 15 schwenkt, die Verbindung des ersten Hebels 25 zwischen Karosserie 13 und Heckklappe 1 gelöst werden muß oder wenn die Heckklappe 1 um den vorderen Viergelenkmechanismus 11 schwenkt, die Verbindung des dritten Hebels 29 zwischen der Karosserie 13 und Heckklappe 1 gelöst werden muß. Schwenkbewegungen um den hinteren oder um den vorderen Viergelenkmechanismus können hierbei jeweils durch Antreiben des zweiten Hebels 27 erfolgen. Hierdurch wird die Betätigung gegenüber bekannten Mechaniken deutlich vereinfacht, da nur ein einziger Hebel über einen einzigen Antrieb angetrieben werden muß, um die unterschiedlichen Öffnungspositionen der Heckklappe 1 zu erreichen.

Der vorstehend beschriebene Mechanismus ist sowohl auf der rechten als auch auf der linken Seite des Fahrzeugs im Kofferraum oberhalb eines Radhauses 63 vorgesehen.

Nachstehend wird der Funktionsablauf beim Verschwenken der Heckklappe 1 aus der geschlossenen Position der Heckklappe 1 gemäß Fig. 1 um den vorderen Viergelenkmechanismus 11 in die geöffnete Position der Heckklappe 1 gemäß Fig. 2 beschrieben. Zunächst wird der erste Schloßmechanismus 43 von seiner ersten Stellung (Fig. 1), bei der das sechste Gelenk 36 mit der Heckklappe 1 verbunden ist, in seine zweite Stellung (Fig. 2), bei der das sechste Gelenk 36 gegenüber der Heckklappe 1 gelöst ist, bewegt. Weiterhin wird der zweite Schloßmechanismus 51 von der ersten Stellung (Fig. 1), bei der das erste Gelenk 31 über den Stützhebel 41 mit der Karosserie 13 und ebenso über den Stützhebel 41 mit der Heckklappe 1 verbunden ist, in die zweite Stellung bewegt (Fig. 2), bei der das erste Gelenk 31 über den Stützhebel 41 mit der Karosserie 13 verbunden ist und der Stützhebel 41 gegenüber der Heckklappe 1 gelöst ist. Dann wird der zweite Hebel 27 mittels eines elektromotorischen oder hydraulischen Antriebs 65 im Uhrzeigersinn um das dritte Gelenk 33 gedreht, so daß die Heckklappe 1 um das vordere Viergelenk 11 in eine geöffnete Position geschwenkt wird, bei der der Kofferraum 23 von der Rückseite des Fahrzeugs zum Beladen mit Gepäck zugänglich wird. Der Verschluß der Heckklappe 1 erfolgt in umgekehrter Reihenfolge.

Nachstehend wird der Funktionsablauf beim Verschwenken der Heckklappe 1 aus der geschlossenen Position der Heckklappe 1 gemäß Fig. 1 um den hinteren Viergelenkmechanismus 15 in die geöffnete Position der Heckklappe 1 gemäß Fig. 3 beschrieben, bei der ein Verstauen der zusammengefalteten Dachkonstruktion 17 im Kofferraum 23 möglich ist. Dabei verbleibt der erste Schloßmechanismus 43 in seiner ersten Stellung (Fig. 1), bei der das sechste Gelenk 36 mit der Heckklappe 1 verbunden ist. Weiterhin wird der zweite Schloßmechanismus 51 von der ersten Stellung (Fig. 1), bei der das erste Gelenk 31 über den Stützhebel 41 mit der Karosserie 13 und ebenso über den Stützhebel 41 mit der Heckklappe 1 verbunden ist, in die dritte Stellung bewegt (Fig. 3), bei der der Stützhebel 41 zusammen mit dem ersten Gelenk 31 gegenüber der Karosserie 13 gelöst und mit der Heckklappe 1 verbunden ist. Dann wird der zweite Hebel 27 mittels des Antriebs 65 im Uhrzeigersinn um das dritte Gelenk 33 gedreht, so daß die Heckklappe 1 um das hintere Viergelenk 15 in eine geöffnete Position geschwenkt wird, bei der der Kofferraum 23 als Stauraum von der Vorderseite zum Verstauen der zusammengefalteten Dachkonstruktion 17 zugänglich wird. Der Verschluß der Heckklappe 1 erfolgt in umgekehrter Reihenfolge.

Die Drehbewegung des Antriebs 65 um den zweiten Hebel 27 sowohl um den vorderen Viergelenkmechanismus 11 als auch um den hinteren Viergelenkmechanismus 15 kann durch eine Gasdruckfeder oder ähnliches unterstützt werden.

Der eine Koppel bildende 41 dient als Positioniereinrichtung für die jeweils gelöste gelenkige Endseite des ersten Hebels 25 oder des dritten Hebels 29. Ein gelöster erster oder dritter Hebel 25 bzw. 29 könnte auch beispielsweise durch eine federvorgespannte Klemmeinrichtung während seiner Stillstandszeit in Position gehalten werden.

Beim vorstehenden Aufbau ist die Dachkonstruktion 17 als eine aus einem festen Dachteil 19 und einem festen Heckfensterteil 21, die nach Art des Mercedes SLK miteinander gelenkig verbunden sind, ausgebildet. Die Dachkonstruktion 17 kann auch in anderer Art aus festen, aneinander angelenkten Dachteilen oder als eine zusammenklappbare Stoffkonstruktion ausgebildet sein.

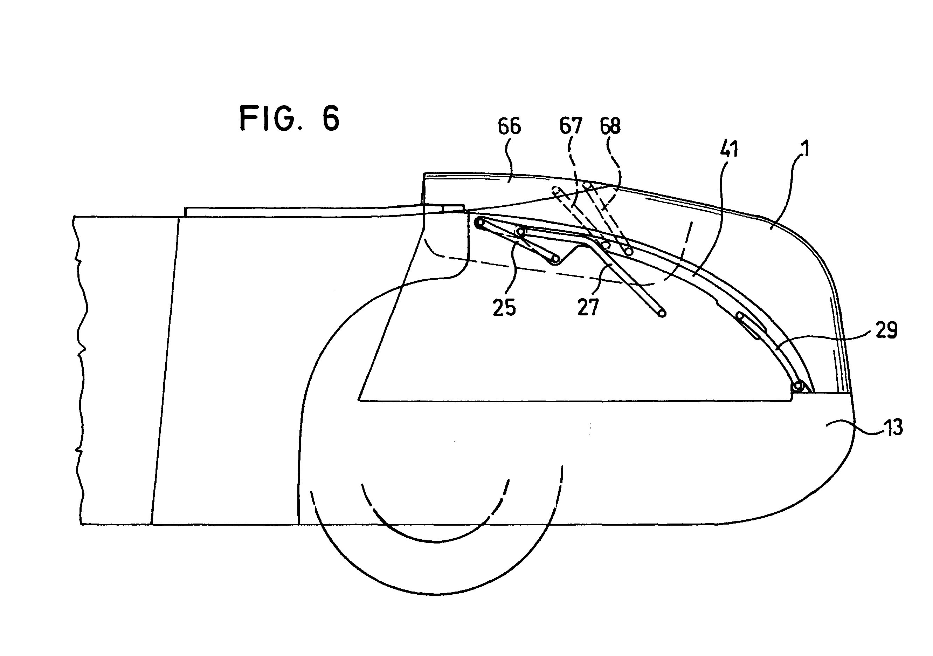

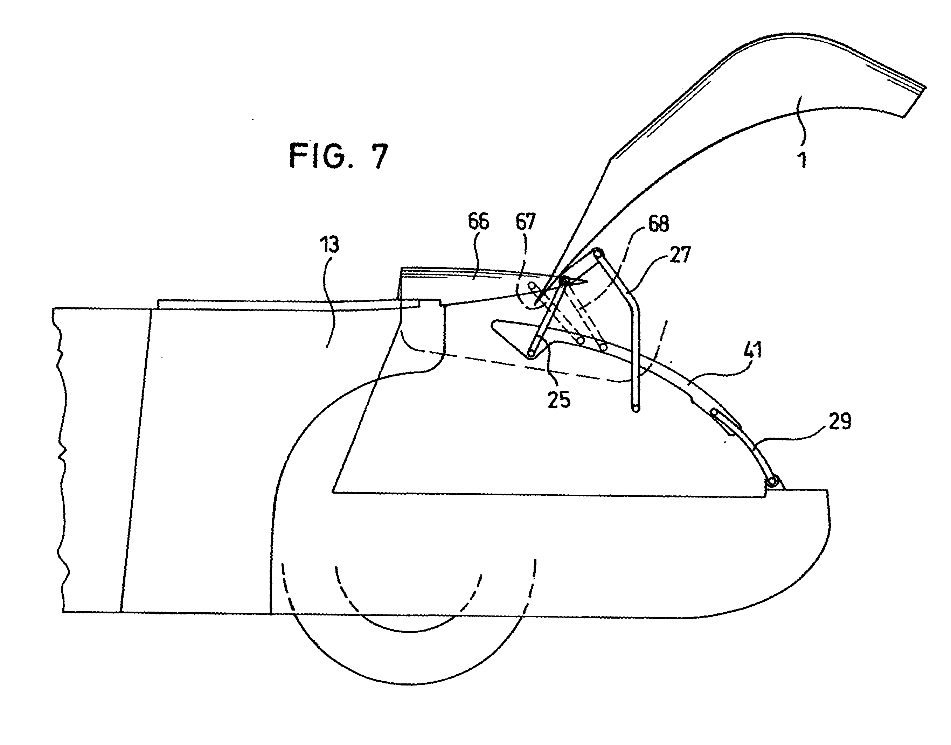

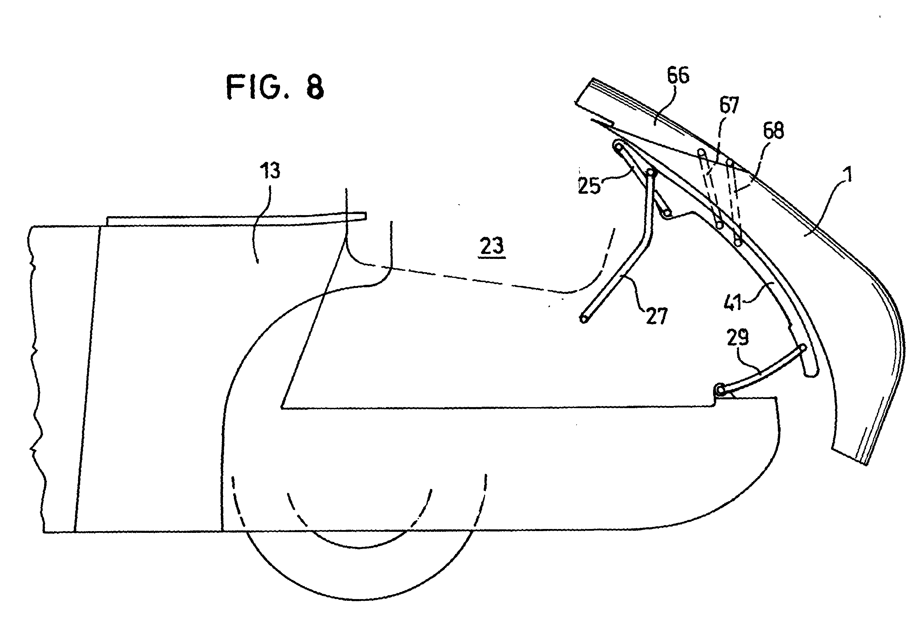

Wie in den Fig. 6 bis 8 analog zu den in den Fig. 1 bis 3 dargestellten Öffnungs- bzw. Schließpositionen der Heckklappe 1 verdeutlicht ist, ist eine bei geschlossenem Fahrzeugdach als Hutablage dienende vordere Stauraumabdeckung 66 im dargestellten Ausführungsbeispiel über zwei starre Halterungen 67 bzw. 68 fest mit dem eine Koppel bildenden Stützhebel 41 verbunden, so daß sie bei geschlossener Heckklappe 1 (Fig. 6) oder bei als Kofferraumdeckel geöffneter Heckklappe 1 (Fig. 7) unverändert in ihrer Position verbleibt. Dagegen schwenkt die Stauraumabdeckung 66 bei freigelegtem Stauraum 23 mit der in diesem Falle mit der Heckklappe 1 gekoppelten Koppel in Form des Stützhebels 41, so daß der Stauraum 23 auch in seinem vorderen Bereich ohne zusätzliche Mechanik für die Hutablage in vollem Umfang zugänglich ist. Statt einer starren Verbindung zur Koppel bzw. zum Stützhebel 41 kann alternativ auch eine schwenkbare Anlenkung der Stauraumabdeckung 66 am Stützhebel 41 realisiert sein.

### Bezugszeichenliste

- 1: Heckklappe
- 2: vertikaler Abschnitt der Heckklappe
- 3: Vorderkante
- 5: vordere Schwenkachse
- 7: Hinterkante
- 9: hintere Schwenkachse
- 11: vorderer Viergelenkmechanismus
- 13: Karosserie
- 15: hinterer Viergelenkmechanismus
- 17: Dachkonstruktion
- 19: Dachelement
- 21: Heckfensterelement
- 23: Stauraum
- 25: erster Hebel
- 27: zweiter Hebel
- 29: dritter Hebel
- 31: erstes Gelenk
- 32: zweites Gelenk
- 33: drittes Gelenk
- 34: viertes Gelenk
- 35: fünftes Gelenk
- 36: sechstes Gelenk
- 39: Stoßfänger
- 40: vorderer Endabschnitt
- 41: Stützhebel
- 42: hinterer Endabschnitt
- 43: hinterer Schloßmechanismus
- 45: drehbare Scheibe
- 47: radialer Schlitz
- 49: Stift
- 51: vorderer Schloßmechnismus
- 53: Riegelscheibe
- 55: Stift
- 57: kreisförmiger Schlitz
- 59: radialer Schlitz
- 61: Stift
- 63: Radhaus
- 65: Antrieb
- 66: Stauraumabdeckung
- 67: Halterung
- 68: Halterung

## Patentansprüche

1. Heckklappe (1) eines Fahrzeugs, die wahlweise mittels eines vorderen zwei Hebel (25, 27) aufweisenden Viergelenkmechanismus (11) als Kofferraumdeckel um eine vordere Schwenkachse (5) oder mittels eines hinteren zwei Hebel (27, 29) aufweisenden Viergelenkmechanismus (15) als Verdeckkastenklappe um eine hintere Schwenkachse (9) schwenkbar ist,
**dadurch gekennzeichnet, daß** ein gemeinsamer Hebel (27) sowohl ein Teil des vorderen Viergelenkmechanismus (11) wie auch ein Teil des hinteren Viergelenkmechanismus (15) ist.

2. Heckklappe nach Anspruch 1,
**dadurch gekennzeichnet, daß** ein Hebel (25) des vorderen Viergelenkmechanismus (11) und ein Hebel (29) des hinteren Viergelenkmechanismus (15) mittels einer Koppel (Stützhebel 41) miteinander verbunden sind.

3. Heckklappe nach Anspruch 2,
**dadurch gekennzeichnet, daß** an der Koppel (Stützhebel 41) wenigstens ein Verriegelungsorgan (Schloßmechanismus 51) angeordnet ist, mittels dem die Koppel (Stützhebel 41) zumindest zeitweise relativ zur Karosserie (13) verriegelt gehalten ist.

4. Heckklappe nach einem der Ansprüche 1 bis 3,
**dadurch gekennzeichnet, daß** der vordere Viergelenkmechanismus (11) mittels des ersten Hebels (25), der über ein erstes Gelenk (31) an einer Karosserie (13) des Fahrzeugs und über ein zweites Gelenk (32) an der Heckklappe (1) angelenkt ist und mittels des zweiten Hebels (27) über ein drittes Gelenk (33) an der Karosserie (13) und über ein viertes Gelenk (34) an der Heckklappe (1) angelenkt ist, und
daß der hintere Viergelenkmechanismus (15) mittels des zweiten Hebels (27) über das dritte Gelenk (33) an einer Karosserie (13) des Fahrzeugs und über das vierte Gelenk (34) an der Heckklappe (1) angelenkt ist und mittels des dritten Hebels (29) über ein fünftes Gelenk (35) an der Karosserie (13) und über ein sechstes Gelenk (36) an der Heckklappe (1) angelenkt ist.

5. Heckklappe nach Anspruch 4,
**dadurch gekennzeichnet, daß** bei geschlossener Heckklappe (1) das erste Gelenk (31) nahe dem vorderen Endbereich der Heckklappe (1), das zweite Gelenk (32) vor dem ersten Gelenk (31), das dritte Gelenk (33) in einem mittleren Abschnitt der Längserstreckung eines durch die Heckklappe (1) abdeckbaren Kofferraums (23), das vierte Gelenk (34) im vorderen Endbereich der Heckklappe (1), das fünfte Gelenk (35) im hinteren, unteren Endbereich des Kofferraums (23) und das sechste Gelenk (36) im hinteren oberen Endbereich des Kofferraums (23) angeordnet ist.

6. Heckklappe nach einem der Ansprüche 1 bis 5,
**dadurch gekennzeichnet, daß** zum Schwenken der Heckklappe (1) um den vorderen Viergelenkmechanismus (11) entweder das sechste Gelenk (36) gegenüber der Heckklappe (1) oder das fünfte Gelenk (35) gegenüber der Karosserie (13) lösbar ist, und
daß zum Schwenken der Heckklappe (1) um den hinteren Viergelenkmechanismus (15) entweder das zweite Gelenk (32) gegenüber der Heckklappe (1) oder das erste Gelenk (31) gegenüber der Karosserie (13) lösbar ist.

7. Heckklappe nach einem der Ansprüche 1 - 6,
**dadurch gekennzeichnet, daß** durch Antreiben des zweiten Hebels (27) sowohl die Schwenkbewegung des vorderen Viergelenkmechanismus (11) als auch die des hinteren Viergelenkmechanismus (15) erfolgt.

8. Heckklappe nach einem der Ansprüche 3 bis 7,
**dadurch gekennzeichnet, daß** das erste Gelenk (31) und das sechste Gelenk (36) über die Koppel (Stützhebel 41) gelenkig verbunden sind, wobei beim Schwenken um den vorderen Viergelenkmechanismus (11) das sechste Gelenk (36) über einen ersten Schloßmechanismus (43) gegenüber der Heckklappe (1) gelöst und das erste Gelenk (31) über den zweiten Schloßmechanismus (51) mit der Karosserie (13) verbunden ist, und beim Schwenken um den hinteren Viergelenkmechanismus (15) das Gelenk (34) über den zweiten Schloßmechanismus (51) gegenüber der Karosserie (13) gelöst und das sechste Gelenk (36) über den ersten Schloßmechanismus (43) mit der Heckklappe (1) verbunden ist.

9. Heckklappe nach Anspruch 8,
**dadurch gekennzeichnet, daß** die Heckklappe (1) bei verriegeltem ersten und zweiten Schloßmechanismus (43, 51) in ihrer geschlossenen Position gehalten ist.

10. Heckklappe nach Anspruch 8 oder 9,
**dadurch gekennzeichnet, daß** der erste Schloßmechanismus (43) zwei Stellungen einnehmen kann, wobei in einer ersten Stellung das sechste Gelenk (36) über die Koppel (Stützhebel 41) mit der Heckklappe (1) verbunden ist und in einer zweiten Stellung das sechste Gelenk (36) gegenüber der Heckklappe (1) gelöst ist.

11. Heckklappe nach Anspruch 7 oder 8,
**dadurch gekennzeichnet, daß** der zweite Schloßmechanismus (51) drei Stellungen einnehmen kann, wobei in einer ersten Stellung das erste Gelenk (31) über die Koppel (Stützhebel 41) mit der Karosserie (13) und ebenso über die Koppel (Stützhebel 41) mit der Heckklappe (1) verbunden ist, in einer zweiten Stellung das erste Gelenk (31) über die Koppel (Stützhebel 41) mit der Karosserie (13) verbunden und gegenüber der Heckklappe (1) gelöst ist, und in einer dritten Stellung das erste Gelenk (31) über die Koppel (Stützhebel 41) gegenüber der Karosserie (13) gelöst und mit der Heckklappe (1) verbunden ist.

12. Heckklappe nach einem der Ansprüche 2 bis 11,
**dadurch gekennzeichnet, daß** eine Stauraumabdeckung (66) mit der Koppel (Stützhebel 41) verbunden ist.

13. Heckklappe nach Anspruch 12,
**dadurch gekennzeichnet, daß** die Stauraumabdeckung (66) mit der Koppel (Stützhebel 41) fest verbunden ist.

14. Heckklappe nach Anspruch 12,
**dadurch gekennzeichnet, daß** die Stauraumabdeckung (66) an der Koppel (Stützhebel 41) dreh- oder schwenkbar befestigt ist.

## Claims

1. Tailgate (1) of a vehicle, which can either be pivoted as a luggage compartment lid about a front pivot axis (5) by means of a front four-bar mechanism (11) which has two levers (25, 27), or can be pivoted as a folding-roof compartment cover about a rear pivot axis (9) by means of a rear four-bar mechanism (15) which has two levers (27, 29), **characterised in that** a common lever (27) is both part of the front four-bar mechanism (11) and part of the rear four-bar mechanism (15).

2. Tailgate according to Claim 1, **characterised in that** one lever (25) of the front four-bar mechanism (11) and one lever (29) of the rear four-bar mechanism (15) are interconnected by a connecting rod (support lever 41).

3. Tailgate according to Claim 2, **characterised in that** there is at least one locking element (lock mechanism 51) on the connecting rod (support lever 41), by means of which the connecting rod (support lever 41) is at least temporarily held locked relative to the body (13).

4. Tailgate according to one of Claims 1 to 3, **characterised in that** the front four-bar mechanism (11) is coupled by means of the first lever (25), which is coupled via a first joint (31) to a body (13) of the vehicle and via a second joint (32) to the tailgate (1), and is coupled by means of the second lever (27) via a third joint (33) to the body (13) and via a fourth joint (34) to the tailgate (1) and **in that** the rear four-bar mechanism (15) is coupled by means of the second lever (27) via the third joint (33) to a body (13) of the vehicle and via the fourth joint (34) to the tailgate (1) and is coupled by means of the third lever (29) via a fifth joint (35) to the body (13) and via a sixth joint (36) to the tailgate (1).

5. Tailgate according to Claim 4, **characterised in that**, with the tailgate (1) closed, the first joint (31) is located near the front end area of the tailgate (1), the second joint (32) is located in front of the first joint (31), the third joint (33) is located in a middle section of the lengthwise extension of a luggage compartment (23) that can be covered by the tailgate (1), the fourth joint (34) is located in the front end area of the tailgate (1), the fifth joint (35) is located in the rear lower end area of the luggage compartment (23), and the sixth joint (36) is located in the rear upper end area of the luggage compartment (23).

6. Tailgate according to one of Claims 1 to 5, **characterised in that**, for pivoting of the tailgate (1) about the front four-bar mechanism (11), either the sixth joint (36) is releasable relative to the tailgate (1) or the fifth joint (35) is releasable relative to the body (13), and **in that**, for pivoting of the tailgate (1) about the rear four-bar mechanism (15), either the second joint (32) is releasable relative to the tailgate (1) or the first joint (31) is releasable relative to the body (13).

7. Tailgate according to one of Claims 1 - 6, **characterised in that** both the pivoting motion of the front four-bar mechanism (11) and that of the rear four-bar mechanism (15) are performed by driving the second lever (27).

8. Tailgate according to one of Claims 3 to 7, **characterised in that** the first joint (31) and the sixth joint (36) are connected to one another in an articulated manner via the connecting rod (support lever 41), during pivoting about the front four-bar mechanism (11), the sixth joint (36) being released via a first lock mechanism (43) relative to the tailgate (1) and the first joint (31) being connected via the second lock mechanism (51) to the body (13), and during pivoting about the rear four-bar mechanism (15), the joint (34) being released via the second lock mechanism (51) relative to the body (13) and the sixth joint (36) being connected via the first lock mechanism (43) to the tailgate (1) .

9. Tailgate according to Claim 8, **characterised in that** the tailgate (1) is held in its closed position when the first and second lock mechanisms (43, 51) are locked.

10. Tailgate according to Claim 8 or 9, **characterised in that** the first lock mechanism (43) can assume two positions, in a first position the sixth joint (36) being connected via the connecting rod (support lever 41) to the tailgate (1) and in a second position the sixth joint (36) being released relative to the tailgate (1).

11. Tailgate according to Claim 7 or 8, **characterised in that** the second lock mechanism (51) can assume three positions, in a first position the first joint (31) being connected via the connecting rod (support lever 41) to the body (13) and, likewise via the connecting rod (support lever 41) to the tailgate (1), in a second position the first joint (31) being connected via the connecting rod (support lever 41) to the body (13) and being released relative to the tailgate (1), and in a third position the first joint (31) being released via the connecting rod (support lever 41) relative to the vehicle body (13) and being connected to the tailgate (1).

12. Tailgate according to one of Claims 2 to 11, **characterised in that** a stowage space cover (66) is connected to the connecting rod (support lever 41).

13. Tailgate according to Claim 12, **characterised in that** the stowage space cover (66) is solidly connected to the connecting rod (support lever 41).

14. Tailgate according to Claim 12, **characterised in that** the stowage space cover (66) is pivotably or rotatably attached to the connecting rod (support lever 41).

## Revendications

1. Hayon (1) de véhicule pouvant pivoter soit autour d'un axe de pivotement avant (5) au moyen d'un quadrilatère articulé avant (11) présentant deux bras (25, 27) et constituant ainsi un couvercle de coffre à bagages, soit autour d'un axe de pivotement arrière (9) au moyen d'un quadrilatère articulé arrière (15) présentant deux bras (27, 29) et formant ainsi un couvercle de compartiment de rangement d'une capote, **caractérisé en ce qu'**un bras commun (27) fait à la fois partie du quadrilatère articulé avant (11) et du quadrilatère articulé arrière (15).

2. Hayon selon la revendication 1, **caractérisé en ce qu'**un bras (25) du quadrilatère articulé avant (11) et un bras (29) du quadrilatère articulé arrière (15) sont reliés entre eux par une bielle (bras-support 41).

3. Hayon selon la revendication 2, **caractérisé en ce qu'**au moins un organe de verrouillage (mécanisme de verrouillage 51) est placé sur la bielle (bras-support 41), au moyen duquel la bielle (bras-support 41) est maintenue verrouillée au moins temporairement par rapport à la carrosserie (13).

4. Hayon selon l'une des revendications 1 à 3, **caractérisé en ce que** le quadrilatère articulé avant (11) est constitué par le premier bras (25) qui est relié de manière articulée à un élément de carrosserie (13) du véhicule par l'intermédiaire d'une première articulation (31) et au hayon (1) par l'intermédiaire d'une seconde articulation (32), et par le deuxième bras (27) qui est relié de manière articulée à la carrosserie (13) par l'intermédiaire d'une troisième articulation (33) et au hayon (1) par l'intermédiaire d'une quatrième articulation (34), et **en ce que** le quadrilatère articulé arrière (15) est constitué par le deuxième bras (27) qui est relié de manière articulée à un élément de carrosserie (13) du véhicule par l'intermédiaire de la troisième articulation (33) et au hayon (1) par l'intermédiaire de la quatrième articulation (34), et par le troisième bras (29) qui est relié de manière articulée à la carrosserie (13) par l'intermédiaire d'une cinquième articulation (35) et au hayon (1) par l'intermédiaire d'une sixième articulation (36).

5. Hayon selon la revendication 4, **caractérisé en ce que**, lorsque le hayon (1) est fermé, la première articulation (31) se trouve à proximité de la zone d'extrémité avant du hayon (1), la deuxième articulation (32) devant la première articulation (31), la troisième articulation (33) dans un segment central de l'étendue longitudinale d'un coffre à bagages (23) pouvant être fermé par le hayon (1), la quatrième articulation (34) dans la zone d'extrémité avant du hayon (1), la cinquième articulation (35) dans la zone d'extrémité inférieure arrière du coffre à bagages (23) et la sixième articulation (36) dans la zone d'extrémité supérieure arrière du coffre à bagages (23).

6. Hayon selon l'une des revendications 1 à 5, **caractérisé en ce que**, pour faire pivoter le hayon (1) autour du quadrilatère articulé avant (11), soit la sixième articulation (36) peut être détachée du hayon (1), soit la cinquième articulation (35) peut être détachée de la carrosserie (13), et **en ce que** pour faire pivoter le hayon (1) autour du quadrilatère articulé arrière (15), soit la deuxième articulation (32) peut être détachée du hayon (1), soit la première articulation (31) peut être détachée de la carrosserie (13).

7. Hayon selon l'une des revendications 1 à 6, **caractérisé en ce que** l'entraînement du second bras (27) déclenche à la fois le pivotement du quadrilatère articulé avant (11) et celui du quadrilatère articulé arrière (15).

8. Hayon selon l'une des revendications 3 à 7, **caractérisé en ce que** la première articulation (31) et la sixième articulation (36) sont reliées l'une à l'autre de façon articulée par le biais de la bielle (bras-support 41), sachant que lors du pivotement autour du quadrilatère articulé avant (11), la sixième articulation (36) est détachée du hayon (1) par le biais d'un premier mécanisme de verrouillage (43) et la première articulation (31) est reliée à la carrosserie (13) par le biais du deuxième mécanisme de verrouillage (51), et que lors du pivotement autour du quadrilatère articulé arrière (15), l'articulation (34) est détachée de la carrosserie (13) par le biais du deuxième mécanisme de verrouillage (51) et la sixième articulation (36) est reliée au hayon (1) par le biais du premier mécanisme de verrouillage (43).

9. Hayon selon la revendication 8, **caractérisé en ce que** le hayon (1) est maintenu en position fermée lorsque les premier et deuxième mécanismes de verrouillage (43, 51) sont verrouillés.

10. Hayon selon la revendication 8 ou 9, **caractérisé en ce que** le premier mécanisme de verrouillage (43) peut se mettre dans deux positions, sachant que, dans une première position, la sixième articulation (36) est reliée au hayon (1) par l'intermédiaire de la bielle (bras-support 41) et que, dans une seconde position, la sixième articulation (36) est détachée du hayon (1).

11. Hayon selon la revendication 7 ou 8, **caractérisé en ce que** le deuxième mécanisme de verrouillage (51) peut se mettre dans trois positions, sachant que, dans une première position, la première articulation (31) est reliée à la carrosserie (13) par l'intermédiaire de la bielle (bras-support 41) et au hayon (1) également par l'intermédiaire de la bielle (bras-support 41), que, dans une seconde position, la première articulation (31) est reliée à la carrosserie (13) et détachée du hayon (1) par le biais de la bielle (bras-support 41), et que, dans une troisième position, la première articulation (31) est détachée de la carrosserie (13) et reliée au hayon (1) par le biais de la bielle (bras-support (41).

12. Hayon selon l'une des revendications 2 à 11, **caractérisé en ce qu'**un couvercle de coffre de rangement (66) est relié à la bielle (bras-support 41).

13. Hayon selon la revendication 12, **caractérisé en ce que** le couvercle du coffre de rangement (66) est relié à demeure à la bielle (bras-support 41).

14. Hayon selon la revendication 12, **caractérisé en ce que** le couvercle du coffre de rangement (66) est fixé de façon rotative ou pivotante à la bielle (bras-support 41).
